# EUROPEAN PATENT APPLICATION

(11) **EP 4 717 324 A1**
(43) Date of publication of application: **01.04.2026**
(21) Application number: 24849423.9
(22) Date of filing: 16.07.2024
(51) Int. Cl.: A62C 3/16, A62C 35/68, A62C 99/00, A62C 35/00, A62C 3/06, H01M 50/256

(54) **WORK TABLE**

(30) Priority: 28.07.2023 US 202363529536 P; 18.06.2024 US 202418747124
(71) Applicant: LG Energy Solution, Ltd., Seoul 07335 (KR)
(72) Inventor: BANG, Jung Hak, Daejeon 34122 (KR)
(74) Representative: Plasseraud IP
(86) International application number: PCT/KR2024/010156
(87) International publication number: WO 2025/028853

(57) **Abstract**

A work table according to an embodiment of the present invention includes a top plate which can place a work object thereon, a fire extinguishing tank which is arranged under the top plate and can store a fire extinguishing liquid therein, and a handle unit which can open and close the top plate covering the open upper surface of the fire extinguishing tank.

## Description

### [TECHNICAL FIELD]

### Cross-Reference to Related Applications

This application claims the benefit of priority based on U.S. Patent Application No. 63/529,536, filed on July 28, 2023, and U.S. Patent Application No. 18/747,124, filed on June 18, 2024, the entire disclosures of which are incorporated herein by reference.

The present invention relates to a work table, and more particularly, to a work table equipped with a fire extinguishing tank as a work table which can place a work object such as a battery cell, a battery module and a battery pack on the table and perform working or moving operations.

### [BACKGROUND]

In modern society, as portable devices such as a mobile phone, a notebook computer, a camcorder and a digital camera, and energy storage systems (ESS) have been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, being freely charged and discharged, and having very low self-discharge rate and high energy density.

On the other hand, in various cases, such as in the process of producing battery cells, battery modules and/or battery packs, or transporting the finally produced battery cells, battery modules and/or battery packs, or actually using, inspecting, or repairing the finally produced battery cells, battery modules, and/or battery packs depending on the case, there is a need for a method that can quickly suppress fires when a thermal event such as a fire occurs while making it easier to move battery cells, battery modules, and/or battery packs.

### [DETAILED DESCRIPTION OF THE INVENTION]

### [Technical Problem]

It is an object of the present invention to provide a work table equipped with a fire extinguishing tank as a work table which can place a work object such as a battery cell, a battery module and a battery pack on the table and perform working or moving operations.

It is another object of the present invention to provide a work table that can quickly and easily throw the object into the fire extinguishing tank provided at a lower part when a thermal event such as a fire occurs in the object.

However, the technical problems to be solved by embodiments of the present invention are not limited to the technical problems described above, and can be variously expanded within the scope of the technical idea included in the present invention.

### [Technical Solution]

According to an embodiment of the present invention, there can be provided a work table comprising: a top plate which can place a work object thereon, a fire extinguishing tank which is arranged under the top plate and can store a fire extinguishing liquid therein, and a handle unit which can open and close the top plate covering the open upper surface of the fire extinguishing tank.

The handle unit includes a handle part and a guide shaft coupled to the handle part and capable of supporting the top plate, and the lower surface of the top plate may include a bearing member that can come into contact with the guide shaft.

When the handle part is pulled, the guide shaft having supported the top plate moves forward to be separated from the top plate, so that the top plate can move downward to open the upper surface of the fire extinguishing tank.

The guide shaft can support one edge of the top plate, the edge of the opposite side to the top plate is hinge-coupled to the upper end of the fire extinguishing tank, and the top plate is rotatable downward by at least 90 degrees around the hinge-coupled edge.

The bearing member may be a ball bearing.

The bearing member is provided in plural numbers, and the plurality of bearing members may be arranged along the longitudinal direction of the guide shaft.

One end of the guide shaft is coupled to the handle part, the other end of the guide shaft includes a bearing guide part which can come into contact with the bearing member to support the bearing member thereon, and the bearing guide part may be partially cut along the longitudinal direction of the guide shaft to have a flat or concave shape.

The handle unit further comprises a guide block supporting the guide shaft, and the guide block is fixed at or near one edge of the upper end of the fire extinguishing tank and may include a through hole enabling the guide shaft to move therethrough.

The guide block comprises a locking member; when the locking member of the guide block is locked, the end of the locking member comes into contact with the guide shaft or is inserted into the guide shaft to fix the guide shaft; and after the locking member of the guide block is unlocked, when the handle part is pulled, the guide shaft may move forward.

The handle unit further comprises a stopper including a locking member, and a stopper block supporting the stopper, wherein the stopper block is fixed at or near one edge of the upper end of the fire extinguishing tank, and includes a through hole enabling the stopper to move therethrough; when the locking member of the stopper is locked, the locking member of the stopper is arranged through the stopper and the stopper block; and after the locking member of the stopper is unlocked, when the handle part is pulled, the guide shaft may move forward.

The stopper is arranged in parallel to the guide shaft and has a bar shape or a rod shape, one end of the stopper is coupled to the handle part, the other end of the stopper has a protruding end, and a length of a cross section of the protruding end may be greater than a length of a cross section of the through hole of the stopper block.

The work table further comprises a moving wheel provided at the lower end of the fire extinguishing tank, wherein when the locking member of the stopper is locked, the work table is moveable by pulling or pushing the handle part.

A longitudinal direction of the guide shaft may be orthogonal to an extending direction of one edge of the top plate.

A plurality of sets of the guide shaft and the bearing member are provided, and the handle part coupled to the plurality of guide shafts may have a bar shape arranged in parallel to one edge.

The work table may further comprise a front wall arranged on the edge of the front side of the top plate, wherein a height of the upper end of the front wall may be higher than a height of the top plate.

The work table may further comprise a pipe capable of draining the fire extinguishing liquid at the lower end of the fire extinguishing tank, and a valve coupled to the pipe.

The work object may include at least one of a battery cell, a battery module, and a battery pack.

### [Advantageous Effects]

According to the present invention, it is possible to place a work object such as a battery cell, a battery module, a battery pack, and the like on the table and perform working or moving operations.

Also, according to the present invention, when a thermal event such as a fire occurs in the object, it is possible to quickly and easily throw the object into the fire extinguishing tank provided at a lower part.

The effects of the present invention are not limited to the effects mentioned above, and additional other effects not mentioned above will be clearly understood from the description of claims by those skilled in the art.

### [BRIEF DESCRIPTION OF THE DRAWINGS]

FIG. 1 is a perspective view of a work table according to an embodiment of the present invention;
FIG. 2 represents a usage state of the work table of FIG. 1, showing a case where an object is placed on the work table;
FIG. 3 represents another usage state of the work table of FIG. 1, showing a case where the table moves down to open the upper surface of the fire extinguishing tank;
FIG. 4 represents yet another usage state of the work table of FIG. 1, showing a case where the table is lifted up to open the upper surface of the fire extinguishing tank;
FIG. 5 is an exploded perspective view of a portion of the work table of FIG. 1;
FIG. 6 shows the operation between the guide shaft and the bearing member of the working table of FIG. 1;
FIG. 7 is a top view of the work table of FIG. 1, showing a case where the upper surface of the fire extinguishing tank is opened;
FIG. 8 is a top view of the working table of FIG. 1, showing a case where the upper surface of the fire extinguishing tank is closed;
FIG. 9 is a front view of the work table of FIG. 1;
FIG. 10 is a rear view of the work table of FIG. 1;
FIG. 11 is a side view of the work table of FIG. 1;
FIG. 12 is a rear perspective view of the work table of FIG. 1; and
FIG. 13 is a reference figure of the work table of FIG. 1.

### [DETAILED DESCRIPTION OF THE EMBODIMENTS]

Hereinafter, various embodiments of the present invention will be described in detail with reference to the accompanying drawings so that those skilled in the art can easily carry out them. The present invention can be modified in various different ways, and is not limited to the embodiments set forth herein.

Portions that are irrelevant to the description will be omitted to clearly describe the present invention, and like reference numerals designate like elements throughout the description.

Further, since the size and thickness of each element shown in the accompanying drawing are arbitrarily illustrated for convenience of explanation, it would be obvious that the present invention is not necessarily limited to those illustrated in the drawings. In the drawings, the thickness are exaggerated for clearly expressing several layers and regions. In the drawings, for convenience of explanation, the thicknesses of some layer and regions are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Specific embodiments of the present invention will be described below with reference to the accompanying drawings.

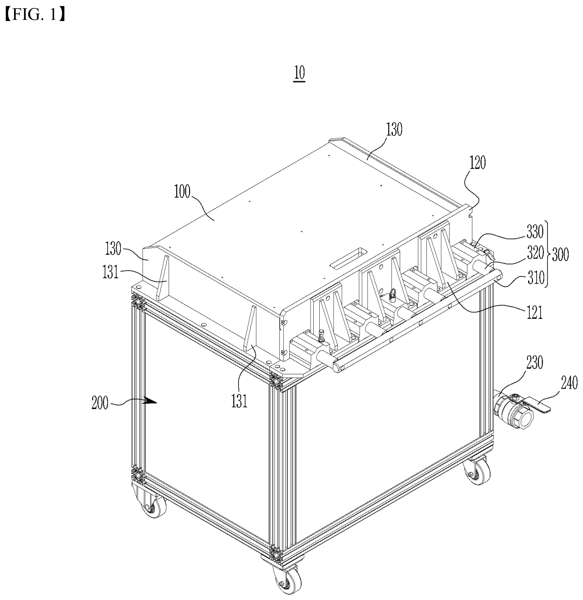

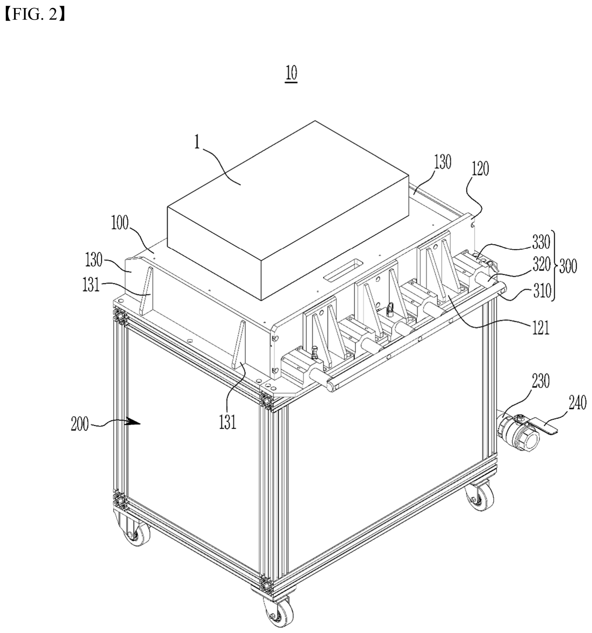

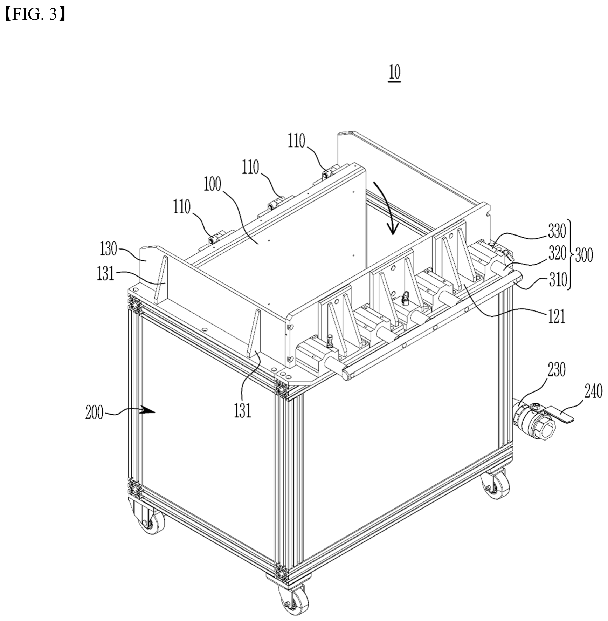

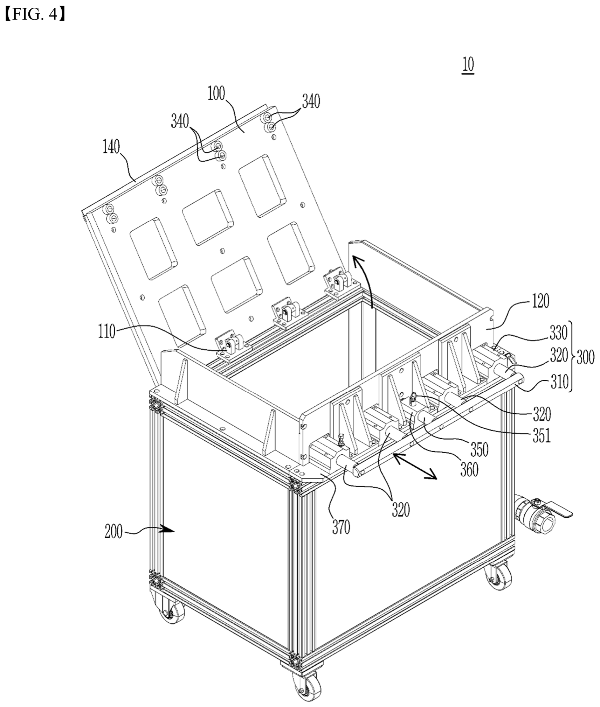

FIG. 1 is a perspective view of a work table (workbench) 10 according to an embodiment of the present invention. FIGS. 2 to 4 are diagrams showing usage states of the work table 10 of FIG. 1, respectively. FIG. 2 shows a case where an object 1 is placed on the work table 10 of FIG. 1. FIG. 3 shows a case where the top plate 100 of the work table 10 of FIG. 1 moves down to open the upper surface of the fire extinguishing tank 200. FIG. 4 shows a case where the top plate 100 of the work table 10 of FIG. 1 is lifted up to open the upper surface of the fire extinguishing tank 200.

The work table 10 according to an embodiment of the present invention comprises a top plate 100 on which the work object 1 is placed, a fire extinguishing tank 200 arranged under the top plate 100, and a handle unit 300 for transporting/moving the work table 10 and opening/closing the top plate 100. The object 1 may be, for example, a battery cell, a battery module, and/or a battery pack, but the present invention is not limited thereto.

As shown in FIG. 2, an operator can place the object 1 on the top plate 100 and perform operations, or can move the work table 10 in a state where the object 1 is placed thereon. The top plate 100 may have, for example, a flat plate shape, and is sufficient if it has a stiffness enough to support the object 1 such as a battery module or a battery pack.

Among the edges of the top plate 100, the edge located on the rear side of the work table 10 is fixed to the upper part of the fire extinguishing tank 200 with a hinge 110 (see FIG. 4). Further, a portion of the top plate 100 located on the front side of the work table 10 is supported by a guide shaft 320 of a handle unit 300. The handle unit 300 including a guide shaft 320 will be described in more detail below.

A fire extinguishing tank 200 is provided under the top plate 100. A fire extinguishing liquid is stored in the fire extinguishing tank 200. The type of the fire extinguishing liquid is not limited, and it is sufficient as long as it can suppress fire when a fire occurs in the object 1 such as a battery cell, a battery module, and/or a battery pack, and may be, for example, cooling water or salt water.

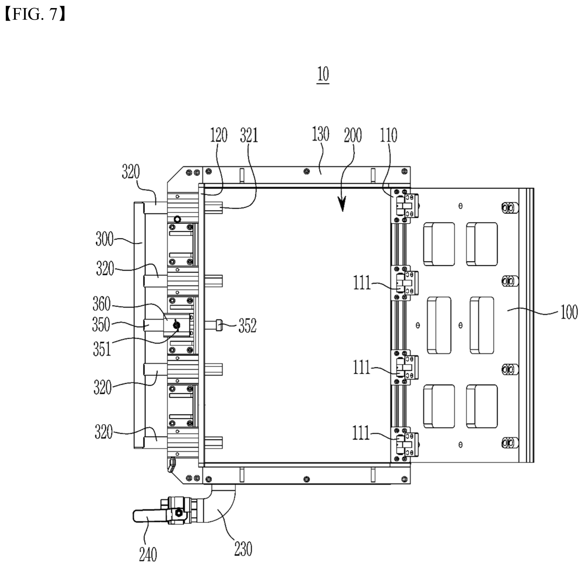

The fire extinguishing tank 200 has an open upper surface, and the open upper surface of the fire extinguishing tank 200 may be covered with the top plate 100. The fire extinguishing tank 200 may include, for example, frames 210 forming a skeleton of the fire extinguishing tank 200 and plates 220 covering the open surfaces (see FIG. 7) between the frames 210 and water-tightly coupled to the frame 210. At this time, a sealing member (not shown) can be further provided to the coupled portion between the frame 210 and the plate 220 so that the fire extinguishing liquid does not leak at the coupled portion between the frame 210 and the plate 220. The present invention is not limited to those described above, and any structure capable of supporting the top plate 100 and the object 1 on the top plate 100 while storing the fire extinguishing liquid therein, such as a structure in which the fire extinguishing tank 200 is integrally formed and can have the shape of a water tank or storage tank having an open upper surface, is sufficient, and can be modified and changed in various ways.

The material of the fire extinguishing tank 200 may be made of a metal, but may also be made of a rigid plastic. In some cases, the material can be changed, such as the frame 210 being made of a metal, and the plate 220 being made of a plastic. If the fire extinguishing liquid is a salt water, the rigid plastic may be used to prevent corrosion of the fire extinguishing tank 200, but in the case of using the metal, a coating layer can be provided to prevent corrosion. In some cases, various modifications and changes can be made, such as the exterior of the fire extinguishing tank 200 being made of a metal and the interior being made of aplastic.

A pipe 230 capable of draining the fire extinguishing liquid inside the fire extinguishing tank 200 is connected to the fire extinguishing tank 200, and the pipe 230 is provided with a valve 240 capable of opening/closing the pipe 230.

On the other hand, as shown in FIGS. 1 and 2, the open upper surface of the fire extinguishing tank 200 is covered with the top plate 100. In addition, as shown in FIGS. 3 and 4 , the top plate 100 covering the upper surface of the fire extinguishing tank 200 can be opened and closed. Thereby, the upper surface of the fire extinguishing tank 200 can be opened.

When an operator pulls a handle part 310 of the handle unit 300, a guide shaft 320 coupled to the handle part 310 moves to be separated from the top plate 100. Accordingly, the top plate 100 is not supported, so that the top plate 100 falls down in the direction of gravity as shown in FIG. 3. At this time, since the edge of the rear side of the top plate 100 is still fixed by the hinge 110 (see FIG. 4), the top plate 100 rotates around the edge of the rear side of the top plate 100 as a rotational axis while the edge of the rear side of the top plate 100 being fixed, and thus, falls in the inside of the fire extinguishing tank 200. At this time, the object 1 placed on the top plate 100 also falls into the fire extinguishing tank 200 by gravity.

In normal times, in a state where the open upper surface of the fire extinguishing tank 200 is covered with the top plate 100, namely, in a state where the top plate 100 is located horizontally, an object 1 such as a battery module or a battery pack is placed on the top plate 100, and an operator may perform working operation or move the object 1. In case of emergency, for example, when a thermal event (fire, etc.) occurs in the object 1, since the fire extinguishing liquid is stored inside the fire extinguishing tank 200, the upper surface of the fire extinguishing tank 200 is opened, and the object 1 can quickly fall into the fire extinguishing tank 200 to extinguish the fire as shown in FIG. 3.

Referring to FIG. 4, the top plate 100 and the fire extinguishing tank 200 is hinge-coupled with a hinge 110. For stronger coupling and support, the top plate 100 and the frame 210 of the fire extinguishing tank 200 can be coupled with the hinge 110. The hinge 110 can be rotated by at least 80 degrees, and as shown in FIGS. 3 and 4, it can be rotated by 180 degrees, and in some instances, it can be rotated up to 360 degrees at an angle of greater than 180 degrees. If the hinge 110 can rotate at least 180 degrees, the top plate 100 may rotate downward to open the fire extinguishing tank 200 as shown in FIG. 3, and the top plate 100 may rotate upward to open the fire extinguishing tank 200 as shown in FIG. 4.

For example, as shown in FIG. 4, in a state in which the top plate 100 rotates and moves upward and the fire extinguishing tank 200 is opened, the fire extinguishing liquid may be supplied into the fire extinguishing tank 200. If the hinge 110 can be opened only by about 90 degrees, as shown in FIG. 3, even in a state in which the top plate 100 rotates and moves downward and the fire extinguishing tank 200 is opened, the fire extinguishing liquid can also be supplied into the fire extinguishing tank 200.

Referring to FIG. 1 again, the front wall 120 is provided at the edge of the front side of the top plate 100. Additionally, the front wall 120 may be located at the upper end of the fire extinguishing tank 200. The height of the upper end of the front wall 120 may be the same as the height of the upper end of the top plate 100, but may be higher than that. When the height of the upper end of the front wall 120 is higher than the height of the upper end of the top plate 100, it is possible to prevent the object 1 from falling toward the operator. It is possible to prevent the object 1 from falling toward the operator during operation in normal times. Further, above all, in case of emergency, even if the top plate 100 rotates and moves downward, and the object 1 on which a fire has occurred is also rotated and rolled toward the operator, the object 1 collides with the front wall 120, thereby preventing the object 1 from falling towards the operator. The front wall 120 may include at least one support member 121 that supports the front wall 120 provided in a direction perpendicular to the extending direction of the front wall 120. In addition, the handle unit 300 can be coupled to the front wall 120, which will be described in detail later.

In addition, the front edge of the top plate 100 may further comprise a sealing curtain 140 (see FIG. 4) provided along the front edge. The size of the top plate 100 approximately matches with the size of the open upper surface of the fire extinguishing tank 200, but the size of the top plate 100 may be smaller than the size of the open upper surface of the fire tank 200. When the top plate 100 rotates and moves down and falls into the fire extinguishing tank 200, it is intended to prevent a situation where the top plate 100 is caught in the open upper surface of the fire extinguishing tank 200 and fails to fall. Thereby, an open gap may exist between the top plate 100 and the open upper surface of the fire extinguishing tank 200, and this gap can be covered with the sealing curtain 140.

Additionally or alternatively, side walls 130 may be provided on both side edges of the top plate 100. Also, the side wall 130 may be located at the upper end of the fire extinguishing tank 200. When the height of the upper end of the side wall 130 is higher than the height of the top plate 100, it is possible to prevent the object 1 from falling outside the work table 10. The side wall 130 may include at least one support member 131 that supports the side wall 130 provided in a direction perpendicular to the extending direction of the side wall 130.

Also, additionally or alternatively, although not shown in the drawings of the present invention, a rear wall (not shown) may also be provided at the rear side edge of the top plate 100.

Next, referring to FIGS. 4 to 8, the opening and closing operation of the top plate 100 will be described in detail.

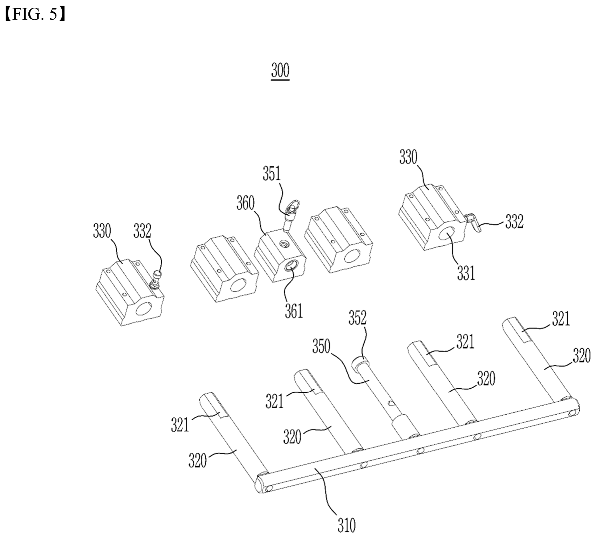

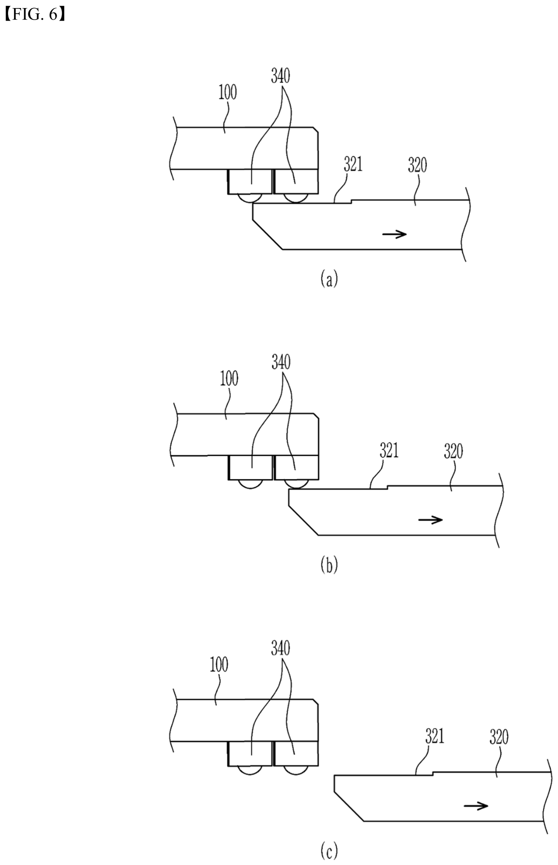

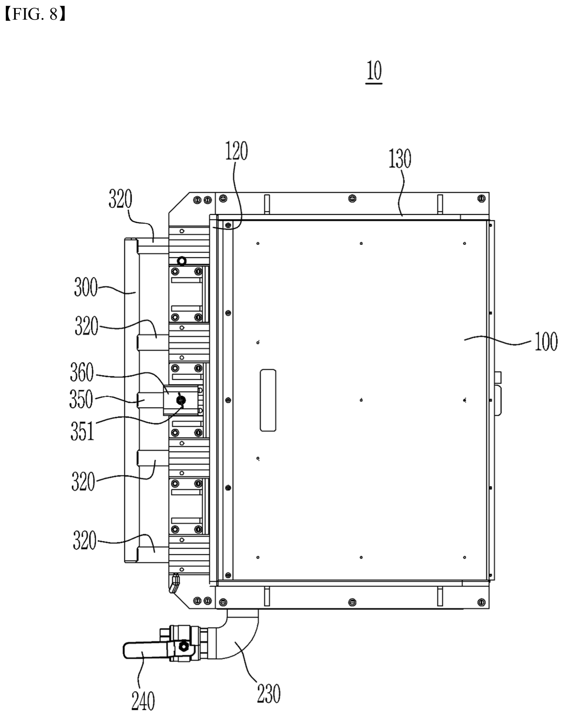

As described above, FIG. 4 shows a case in which the top plate 100 is rotated upward to open the upper surface of the fire extinguishing tank 200. FIG. 5 is an exploded perspective view of a portion of the work table 10 of FIG. 1. FIG. 6 shows the operation between the guide shaft 320 and the bearing member 340 of the working table of FIG. 1. FIG. 7 is a top view of the work table 10 of FIG. 1, showing a case where the upper surface of the fire extinguishing tank 200 is opened. FIG. 8 is a top view of the working table 10 of FIG. 1, showing a case where the upper surface of the fire extinguishing tank 200 is closed.

The handle unit 300 is arranged on the front surface of the work table 10. For example, the handle unit 300 may be provided on the upper end side of the fire extinguishing tank 200. The handle part 310 may be arranged at the front side end of the top plate 100, and may be, for example, in the form of a bar arranged parallel along the front side edge of the top plate 100. The operator may also hold the handle part 310 of the handle unit 300 and move the work table 10. In case of emergency, it is possible to open the upper surface of the fire extinguishing tank 200 by unlocking the locking member 351 of the stopper 350 (pulling a safety pin) and pulling the handle part 310, as described above in FIG. 3.

At least one guide shaft 320 is connected to the handle part 310. The guide shaft 320 supports the handle part 310 and also guides the moving direction of the handle part 310 (see the arrow in FIG. 4 ).

As shown in FIGS. 4, and 5 to 8, one end of the guide shaft 320 is connected to the handle part 310, and the other end of the guide shaft 320 may protrude toward the top plate 100 based on the front side edge of the top plate 100 to support the top plate 100. In other words, the guide shaft 320 protrudes into the fire extinguishing tank 200 based on the front side edge of the top plate 100 (see FIG. 7). Thereby, the top plate 100 is supported on the other end of the guide shaft 320 (see FIG. 8). An extension direction (longitudinal direction) of the guide shaft 320 may be orthogonal to an extension direction of a front side edge of the top plate 100.

At least one guide shaft 320 may be provided, and in the present embodiment, a case where two stoppers are provided on each side with reference to the stopper 350 located in the central part is illustratively shown. The number of the guide shaft 320 is not particularly limited, and is sufficient if it facilitates movement of the handle part 310 and supports the top plate 100 horizontally. Further, the guide shaft 320 may have a cylindrical or columnar shape as shown in the present invention, but the present invention is not limited to the illustrated one, and is sufficient to have a bar shape.

The other end of the guide shaft 320 comes into contact with the bearing member 340 on the lower surface of the top plate 100. The other end of the guide shaft 320 includes a bearing guide part 321 so as to be stably contact the bearing member 340. A bearing member 340 is supported on the bearing guide part 321. The bearing guide part 321 may be partially cut along the longitudinal direction of the guide shaft 320 to have a step difference. The bearing guide part 321 may have a flat shape or a concave shape so as to substantially fit with the outer surface of the bearing member 340.

Referring to FIGS. 5 and 6, for example, when the guide shaft 320 has a columnar shape, the bearing guide portion 321 has a planar shape, so that even if the guide shaft 320 contacts the bearing member 340, which is a ball bearing, the bearing member 340 can be stably supported on the bearing guide part 321 of the guide shaft 320. Accordingly, it is possible to prevent the bearing member 340 from slipping laterally and detaching from the guide shaft 320.

Further, referring to FIGS. 6(a) to (c), the bearing member 340 is usually supported on the bearing guide part 321 of the guide shaft 320 as shown in FIG. 6(a). Namely, the guide shaft 320 supports the top plate 100 with the bearing member 340 interposed therebetween. It is sufficient that the bearing member 340 has a stiffness enough to support the top plate 100 and the object 1 placed on the top plate 100 and is made of a material resistant to corrosion. The bearing member 340 may be made of, for example, a metal, a high-strength plastic, or the like, and may be made of, for example, a stainless steel.

On the other hand, in case of emergency, if the bearing member 340 is not provided when trying to pull the handle part 310 and move the guide shaft 320, due to the frictional force between the guide shaft 320 and the top plate 100, the guide shaft 320 receives a load of the top plate 100 and the object 1 such as a battery module or battery pack on the top plate 100 as it is. Accordingly, there may be problems that it is difficult for the operator to pull the handle part 310, and it is difficult to extinguish the fire of the object 1 quickly.

However, according to the present invention, the bearing member 340 can allow the guide shaft 320 to easily move in the front direction of the work table 10 with the rolling friction path between the guide shaft 320 and the top plate 100 as shown in FIGS. 6(b) and (c). That is, the operator can pull the handle part 310 to release the state in which the guide shaft 320 is supporting the top plate 100 without applying a large force. Accordingly, the upper surface of the fire extinguishing tank 200 is easily opened, and the object 1 on which a fire has occurred on the top plate 100 can also be quickly thrown into the fire extinguishing liquid of the fire extinguishing tank 200.

The bearing member 340 may be, for example, a ball bearing. Further, the bearing member 340 may be, for example, a member in which a plurality of ball bearings are arranged in a row as shown in the drawings of the present invention. When the bearing members 340 (e.g., a plurality of ball bearings) are aligned along the longitudinal direction of the guide shaft 320, moving the guide shaft 320 forward can be further facilitated. However, the present invention is not limited to the illustrated one, and the number of ball bearings can be changed. As long as the bearing members 340 can all be placed on the bearing guide part 321 of the guide shaft 320, various modifications and changes are possible, such as being able to be placed in a plurality of rows.

Referring to FIG. 5 again, the guide shaft 320 may be supported by the guide block 330. The guide block 330 includes a through hole 331, and the guide shaft 320 is arranged through the through hole 331 of the guide block 330. Therefore, the guide shaft 320 can be stably supported without shaking in the vertical direction or the left-right direction.

The handle unit 300 including the handle part 310, the guide shaft 320, and the guide block 330 may be fixedly mounted at or near the upper end of the fire extinguishing tank 200. For example, it may be mounted on the upper side of the fire extinguishing tank 200 itself, or it may be mounted on the front wall 120 (see FIG. 4). Further, it is possible to further include a guide block support wall 370 (see FIG. 4) that supports the guide block 330 downward. The guide block support wall 370 may be arranged on the upper end of the fire extinguishing tank 200, and may be arranged on the front side of the work table 10 among them. The handle unit 300 is sufficient if the guide shaft 320 is installed at a position capable of supporting the top plate 100, and can be modified and changed in various ways.

The guide block 330 may further include a locking member 332. When the operator pulls the handle part 310 in normal times, it is preferable that the work table 10 moves as a whole. When only the handle part 310 and the guide shaft 320 move forward alone, the upper surface of the fire extinguishing tank 200 is opened as described above. That is, even if the operator pulls the handle part 310 in normal times, the guide shaft 320 must be fixed to the guide block 330. For this purpose, the guide block 330 may further include a locking member 332. In normal times, in order to lock the locking member 332, the end of the locking member 332 contacts the guide shaft 320 within the through hole 331 of the guide block 330 or is inserted into the guide shaft 320 to firmly hold the guide shaft 320, thereby preventing unintended movement of the guide shaft 320 . In case of emergency, when the lock member 332 provided on the guide block 330 is turned or pulled, the locking member 332 hooked on the guide shaft 320 is unlocked to change to the state in which the guide shaft 320 can move forward.

Further, the work table 10 according to an embodiment of the present invention may further include a stopper 350 to thereby prevent the guide shaft 320 from unintentionally moving (forward or backward) in normal times. The stopper 350 may have a bar shape or a rod shape, and can be arranged in parallel to the guide shaft 320 and coupled to the handle part 310. The stopper 350 is inserted into the through hole 361 of the stopper block 360. The locking member 351 can be made, for example, in the shape of a pin or rod. The locking member 351 can pass through and fix the stopper block 360 and the stopper 350 inserted into the through hole 361 of the stopper block 360. At this time, the extension direction of the locking member 351 and the extension direction of the stopper 350 may be orthogonal to each other. In normal times, since the locking member 351 passes through and fixes the stopper 350 and the stopper block 360 together, the stopper 350 is fixed to the stopper block 360 and cannot move. Therefore, the handle part 310 and the guide shaft 320 cannot move alone together with stopper 350.

In case of emergency, when the operator unlocks the locking member 351 (for example, when the pin-shaped or rod-shaped locking member 351 is pulled out, namely, when the locking member 351 is separated from the stopper 350), the stopper 350 becomes movable within the stopper block 360. Thereby, if the operator pulls the handle part 310, the guide shaft 320 may move forward within the guide block 330. For example, a ring is provided at the upper end of the locking member 351 so that the operator can grasp the ring to pull out the locking member 351. However, the present invention is not limited thereto, and the shape of the lock member 351 can be modified and changed in various ways.

Meanwhile, one end of the stopper 350 is connected to the handle part 310, and the other end of the stopper 350 includes a protruding end 352. The length (diameter) of the cross section of the protruding end 352 is greater than the length (diameter) of the cross section of the stopper 350. More specifically, the length (diameter) of the cross section of the protruding end 352 is greater than the length (diameter) of the cross section of the stopper 350 arranged in the through hole 361 of the stopper block 360. Therefore, when the operator pulls the handle part 310, the protruding end 352 of the stopper 350 contacts the stopper block 360, so that the stopper 350 cannot move forward any further. Accordingly, it is possible to prevent the handle part 310, the guide shaft 320 connected to the handle part 310, and the stopper 350 from completely falling off from the work table 10.

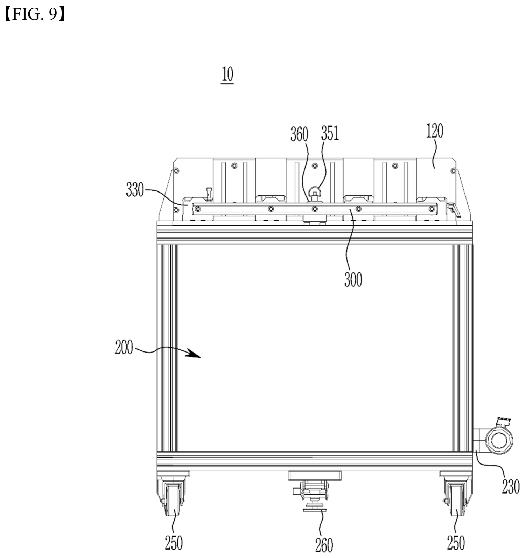

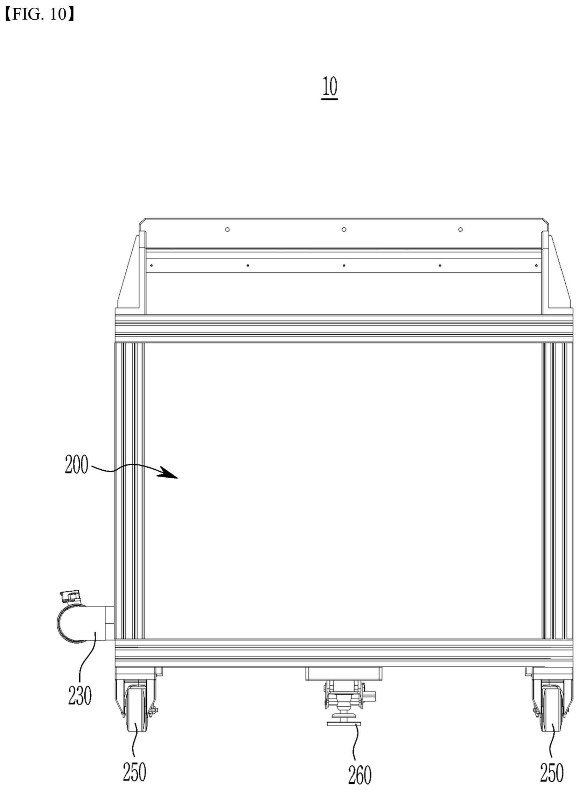

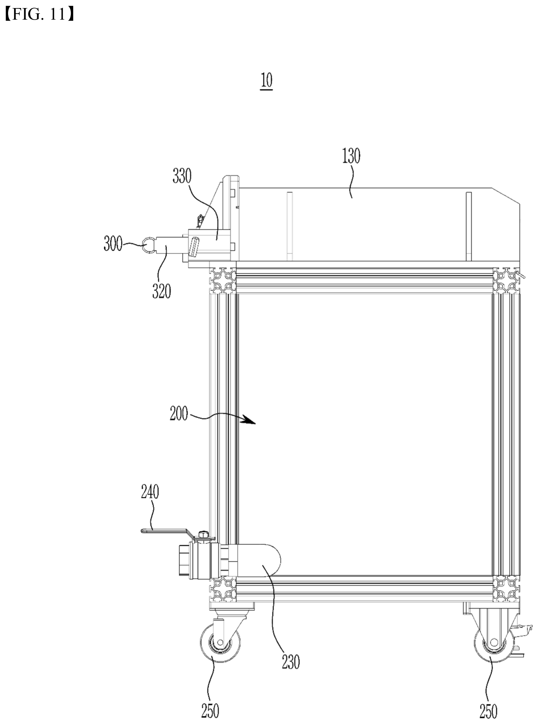

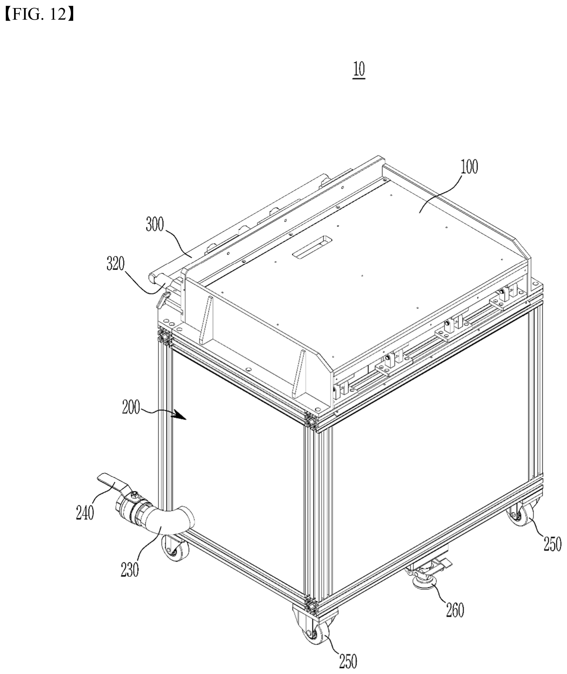

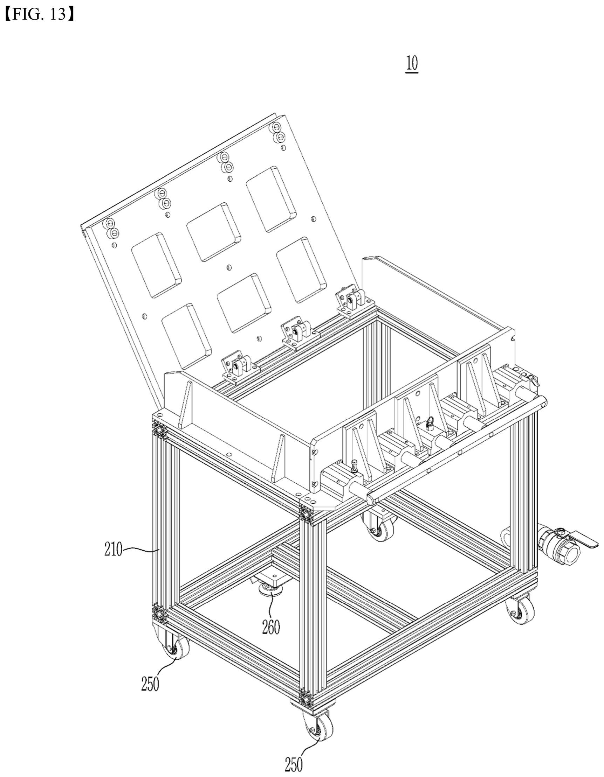

FIG. 9 is a front view of the work table 10 of FIG. 1. FIG. 10 is a rear view of the work table 10 of FIG. 1. FIG. 11 is a side view of the work table 10 of FIG. 1. FIG. 12 is a rear perspective view of the work table 10 of FIG. 1. FIG. 13 is a reference figure of the work table 10 of FIG. 1.

Referring to FIGS. 9 to 13, wheels 250 that can move the work table 10 and/or floor stoppers 260 that can fix the work table 10 to the floor may be further provided at the lower end of the fire extinguishing tank 200. Since the operator can move the pedal of the floor stopper 260 in the vertical direction, the work table 10 is fixed to the floor with the floor stopper 260 during working, and the fixation of the floor stopper 260 may be released during movement.

According to the above-mentioned embodiments of the present invention, it is possible to place an object 1 such as a battery cell, a battery module, or a battery pack on the work table 10, and perform working or moving operations. In addition, when a thermal event such as a fire occurs in the object 1, the object can be simply and easily thrown into fire extinguishing tank provided at the lower part of the work table 10 to thereby quickly suppress the fire.

Although the invention has been described in detail above with reference to preferred embodiments thereof, the scope of the present invention is not limited thereto, and various modifications and improvements can be made by those skilled in the art using the basic concepts of the present invention as defined in the appended claims, which also falls within the scope of the present invention.

### [Description of Reference Numerals]

1: object
10: work table
100: top plate
110: hinge
120: front wall
121: support member
130: side wall
131: support member
140: sealing curtain
200: fire extinguishing tank
210: frame
220: plate
230: pipe
240: valve
250: wheel
260: floor stopper
300: handle unit
310: handle part
320: guide shaft
330: guide block
340: bearing member
350: stopper
351: lock member
360: stopper block
370: guide block support wall

## Claims

1. A work table comprising:
a top plate which can place a work object thereon,
a fire extinguishing tank which is arranged under the top plate and stores a fire extinguishing liquid therein, and
a handle unit which can open and close the top plate covering an open upper surface of the fire extinguishing tank.

2. The work table of claim 1, wherein:
the handle unit includes a handle part and a guide shaft coupled to the handle part and capable of supporting the top plate, and
the lower surface of the top plate includes a bearing member that can come into contact with the guide shaft.

3. The work table of claim 2, wherein:
when the handle part is pulled, the guide shaft having supported the top plate moves forward to be separated from the top plate, so that the top plate moves down to open the open upper surface of the fire extinguishing tank.

4. The work table of claim 2, wherein:
the guide shaft can support one edge of the top plate,
the edge of the opposite side to the one edge of the top plate is hinge-coupled to the upper end of the fire extinguishing tank, and
the top plate is rotatable downward by at least 90 degrees around the hinge-coupled edge.

5. The work table of claim 2, wherein:
the bearing member is a ball bearing.

6. The work table of claim 2, wherein:
the bearing member is provided as a plurality of bearing members, and
the plurality of bearing members are arranged along the longitudinal direction of the guide shaft.

7. The work table of claim 2, wherein:
one end of the guide shaft is coupled to the handle part,
the other end of the guide shaft includes a bearing guide part which can come into contact with the bearing member to support the bearing member thereon, and
the bearing guide part is partially cut along the longitudinal direction of the guide shaft to have a flat or concave shape.

8. The work table of claim 2, wherein:
the handle unit further comprises a guide block supporting the guide shaft, and
the guide block is fixed at or near one edge of the upper end of the fire extinguishing tank and includes a through hole enabling the guide shaft to move therethrough.

9. The work table of claim 8, wherein:
the guide block comprises a locking member,
when the locking member of the guide block is locked, the end of the locking member comes into contact with the guide shaft or is inserted into the guide shaft to fix the guide shaft, and
after the locking member of the guide block is unlocked, when the handle part is pulled, the guide shaft moves forward.

10. The work table of claim 2, wherein:
the handle unit further comprises,
a stopper including a locking member; and
a stopper block supporting the stopper,
wherein the stopper block is fixed at or near one edge of the upper end of the fire extinguishing tank, and includes a through hole enabling the stopper to move therethrough,
when the locking member of the stopper is locked, the locking member of the stopper is arranged through the stopper and the stopper block, and
after the locking member of the stopper is unlocked, when the handle part is pulled, the guide shaft moves forward.

11. The work table of claim 10, wherein:
the stopper is arranged in parallel to the guide shaft and has a bar shape or a rod shape,
one end of the stopper is coupled to the handle part, the other end of the stopper has a protruding end, and a length of a cross section of the protruding end is greater than a length of a cross section of the through hole of the stopper block.

12. The work table of claim 10, further comprising
a moving wheel provided at the lower end of the fire extinguishing tank,
wherein when the locking member of the stopper is locked, the work table is moveable when the handle part is pulled or pushed.

13. The work table of claim 2, wherein:
a longitudinal direction of the guide shaft is orthogonal to an extending direction of one edge of the top plate.

14. The work table of claim 2, wherein:
a plurality of sets of the guide shaft and the bearing member are provided, and
the handle part coupled to the plurality of guide shafts has a bar shape arranged in parallel to one edge.

15. The work table of claim 2,
further comprising a front wall arranged on an edge of a front side of the top plate,
wherein a height of the upper end of the front wall is higher than a height of the top plate.

16. The work table of claim 1, further comprising:
a pipe capable of draining the fire extinguishing liquid at the lower end of the fire extinguishing tank, and a valve coupled to the pipe.

17. The work table of claim 1, wherein:
the work object includes at least one of a battery cell, a battery module, and a battery pack.
